# FASCICULE DE BREVET EUROPEEN

(11) **EP 3 516 007 B1**
(45) Date de publication et mention de la délivrance du brevet: **05.01.2022**
(21) Numéro de dépôt: 17780816.9
(22) Date de dépôt: 15.09.2017
(51) Int. Cl.: C09K 5/04, C10M 171/00

(54) **COMPOSITION A BASE DE 1-CHLORO-3,3,3-TRIFLUOROPROPENE**
ZUSAMMENSETZUNG MIT 1-CHLOR-3,3,3-TRIFLUORPROPEN
COMPOSITION COMPRISING 1-CHLORO-3,3,3-TRIFLUOROPROPENE

(30) Priorité: 19.09.2016 FR 1658751
(43) Date de publication de la demande: 31.07.2019
(73) Titulaire: Arkema France, 92700 Colombes (FR)
(72) Inventeur: RACHED, Wissam, 69630 Chaponost (FR)
(74) Mandataire: Arkema Patent
(86) Numéro de dépôt international: PCT/FR2017/052473
(87) Numéro de publication internationale: WO 2018/051036

(56) Documents cités:
- WO-A1-2015/163072
- WO-A1-2016/112363
- WO-A1-2016/146940
- US-A1- 2010 154 444
- US-A1- 2011 041 529
- US-A1- 2012 329 689
- US-A1- 2013 119 300
- US-A1- 2016 009 973
- US-A1- 2016 178 254

## Description

### DOMAINE DE L'INVENTION

La présente invention concerne une composition renfermant du 1-chloro-3,3,3-trifluoropropène et au moins un lubrifiant, apte à être utilisée dans la réfrigération, climatisation et pompe à chaleur.

### ARRIERE-PLAN TECHNIQUE

Les problèmes posés par les substances appauvrissant la couche d'ozone atmosphérique ont été traités à Montréal où a été signé le protocole imposant une réduction de la production et de l'utilisation des chlorofluorocarbures (CFC). Ce protocole a fait l'objet d'amendements qui ont imposé l'abandon des CFC et étendu la réglementation à d'autres produits, dont les hydrochlorofluorocarbones (HCFC).

L'industrie de la réfrigération et de la climatisation a beaucoup investi dans la substitution de ces fluides frigorigènes et c'est ainsi que les hydrofluorocarbures (HFC) ont été commercialisés.

Dans l'industrie automobile, les systèmes de climatisation des véhicules commercialisés dans de nombreux pays sont passés d'un fluide frigorigène au chlorofluorocarbure (CFC-12) à celui de l'hydrofluorocarbure (1,1,1,2 tetrafluoroéthane : HFC-134a), moins nocif pour la couche d'ozone. Cependant, au regard des objectifs fixés par le protocole de Kyoto, le HFC-134a (GWP = 1430) est considéré comme ayant un pouvoir de réchauffement élevé. La contribution à l'effet de serre d'un fluide est quantifiée par un critère, le GWP (Global Warming Potential) qui résume le pouvoir de réchauffement en prenant une valeur de référence de 1 pour le dioxyde de carbone.

Les hydrofluorooléfines (HFO) ont un pouvoir de réchauffement peu élevé et donc répondent aux objectifs fixés par le protocole de Kyoto. Le document JP 4-110388 divulgue les hydrofluoropropènes comme agent de transfert de chaleur.

D1 fournit un lubrifiant contenant au moins une huile oxygénée avec un ratio carbone/oxygène de 2,5-5,8 susceptible d'être mis en œuvre dans les systèmes de réfrigération opérant avec le 1-chloro-3, 3,3-trifluoropropène.

Dans le domaine industriel, les machines frigorifiques les plus employées sont basées sur le refroidissement par évaporation d'un fluide frigorigène liquide. Après vaporisation, le fluide est compressé puis refroidi afin de repasser à l'état liquide et poursuivre ainsi le cycle.

Les compresseurs frigorifiques utilisés sont du type alternatifs, scroll, centrifuges ou à vis. En général, la lubrification interne des compresseurs est indispensable pour réduire l'usure et l'échauffement des organes en mouvement, parfaire leur étanchéité et les protéger contre la corrosion.

Outre les bonnes propriétés d'agent de transfert de chaleur, pour qu'un fluide frigorigène soit accepté commercialement il doit notamment présenter une stabilité thermique et une compatibilité avec les lubrifiants. En effet, il est hautement souhaitable que le fluide frigorigène soit compatible avec le lubrifiant utilisé dans le compresseur, présent dans la majorité des systèmes de réfrigération. Cette association fluide frigorigène et lubrifiant est importante pour la mise en œuvre et l'efficacité du système de réfrigération, notamment le lubrifiant doit être suffisamment soluble ou miscible dans le fluide frigorigène dans tout l'intervalle de température de fonctionnement.

Il existe donc un besoin de trouver de nouveaux couples fluide frigorigène et lubrifiant, notamment stables thermiquement, aptes à être utilisés en réfrigération, climatisation et pompe à chaleur.

### DESCRIPTION DE L'INVENTION

La présente demande a pour objet une composition comprenant un fluide frigorigène F comprenant du 1-chloro-3,3,3-trifluoropropène (HCFO-1233zd), et au moins un lubrifiant à base d'esters de polyol (POE).

Dans le cadre de l'invention, le « HCFO-1233zd » se réfère au 1-chloro-3,3,3-trifluoropropène, indépendamment de savoir s'il s'agit de la forme cis ou trans. Les termes « HCFO-1233zdZ » et « HCFO-1233zdE » se réfèrent respectivement aux formes cis- et trans- du 1-chloro-3,3,3-trifluoropropène. Le terme « HCFO-1233zd » couvre donc le HCFO-1233zdZ, le HCFO-1233zdE, et tous les mélanges des deux formes isomères dans toutes proportions.

Sauf mention contraire, dans l'ensemble de la demande, les proportions de composés indiquées sont données en pourcentages massiques.

La demanderesse a découvert que les compositions selon l'invention sont avantageusement stables thermiquement.

### Fluide frigorigène

Selon un mode de réalisation, le fluide frigorigène F comprend au moins un composé stabilisant.

Le composé stabilisant selon l'invention peut être tout composé stabilisant connu dans le domaine des fluides frigorigènes.

Parmi les stabilisants, on peut citer notamment le nitrométhane, l'acide ascorbique, l'acide téréphtalique, les azoles tels que le tolutriazole ou le benzotriazole, les composés phénoliques tels que le tocophérol, l'hydroquinone, le t-butyl hydroquinone, le 2,6-di-ter-butyl-4-méthylphénol, les époxydes (alkyl éventuellement fluoré ou perfluoré ou alkényl ou aromatique) tels que les n-butyl glycidyl éther, hexanediol diglycidyl éther, allyl glycidyl éther, butylphénylglycidyl éther, les phosphites, les phosphonates, les thiols et les lactones.

Selon un mode de réalisation préféré, le composé stabilisant ne contient pas d'halogène, de préférence ne contient pas de fluor.

Selon un mode de réalisation préféré, le composé stabilisant est un alcène en C3 à C6 et comportant une seule double liaison.

La présente invention concerne une composition comprenant :
- un fluide frigorigène F comprenant du 1-chloro-3,3,3-trifluoropropène (HCFO-1233zd) et au moins un composé stabilisant alcène en C3 à C6 comportant une seule double liaison ; et
- au moins un lubrifiant à base d'esters de polyol (POE).

Selon un mode de réalisation préféré, le composé stabilisant alcène en C3 à C6 et comportant une seule double liaison, ne contient pas d'halogène, de préférence ne contient pas de fluor.

De préférence, le composé stabilisant est choisi dans le groupe constitué du propène, des butènes, des pentènes et des hexènes, lesdits propènes, butènes, pentènes ne comprennent pas de préférence d'atome d'halogène, tel que par exemple d'atome de fluor. Les butènes et les pentènes sont préférés. Les pentènes sont encore plus particulièrement préférés.

De préférence, le composé stabilisant est un composé alcène ramifié en C5.

Les composés stabilisants alcène en C3 à C6 peuvent être à chaîne linéaire ou ramifiée. Ils sont de préférence à chaîne ramifiée.

De préférence, lesdits composés stabilisants présentent une température d'ébullition inférieure ou égale à 100°C, de préférence encore inférieure ou égale à 75°C, et de manière plus particulièrement préférée inférieure ou égale à 50°C.

Dans le cadre de l'invention, par « *température d'ébullition* », on entend la température d'ébullition à une pression de 101,325 kPa, telle que déterminée selon la norme NF EN 378-1 d'avril 2008.

De préférence également, ils présentent une température de solidification inférieure ou égale à 0°C, de préférence inférieure ou égale à -25°C, et de manière plus particulièrement préférée inférieure ou égale à -50°C.

La température de solidification est déterminée selon l*'Essai n° 102: Point de fusion*/*Intervalle de fusion* (Lignes directrices de l'OCDE pour les essais de produits chimiques, Section 1, Éditions OCDE, Paris, 1995, disponible à l'adresse http://dx.doi.org/10.1787/9789264069534-fr).

Des composés stabilisants préférés de l'invention sont choisis dans le groupe suivant:
- le but-1-ène ;
- le cis-but-2-ène ;
- le trans-but-2-ène ;
- le 2-méthylprop-1-ène ;
- le pent-1-ène ;
- le cis-pent-2-ène ;
- le trans-pent-2-ène ;
- le 2-méthylbut-1-ène ;
- le 2-méthylbut-2-ène ; et
- le 3-méthylbut-1-ène.

Parmi les composés préférés, on peut citer le 2-méthyl-but-2-ène, de formule (CH₃)₂C=CH-CH₃ (température d'ébullition de 39°C environ) ; et le 3-méthyl-but-1-ène, de formule CH₃-CH(CH₃)-CH=CH₂ (température d'ébullition de 25°C environ).

Deux ou plus de deux des composés ci-dessus peuvent également être utilisés en combinaison.

La proportion massique du(des) composé(s) stabilisant(s), tels que décrits ci-dessus, dans le fluide frigorigène F peut notamment être : de 0,01 à 0,05 % ; ou de 0,05 à 0,1 % ; ou de 0,1 à 0,2 %, ou de 0,2 à 0,3 % ; ou de 0,3 à 0,4 % ; ou de 0,4 à 0,5 % ; ou de 0,5 à 0,6 % ; ou de 0,6 à 0,7 % ; ou de 0,7 à 0,8 % ; ou de 0,8 à 0,9 % ; ou de 0,9 à 1 % ; ou de 1 à 1,2 % ; ou de 1,2 à 1,5 %, ou de 1,5 à 2 % ; ou de 2 à 3 % ; ou de 3 à 4 % ; ou de 4 à 5 %, par rapport à la masse totale du fluide frigorigène F.

Selon un mode de réalisation préféré, le fluide frigorigène F est constitué du 1-chloro-3,3,3-trifluoropropène (HCFO-1233zd) et d'au moins un composé stabilisant alcène en C3 à C6 et comportant une seule double liaison, ledit composé stabilisant étant de préférence le 2-méthyl-but-2-ène.

Dans le fluide frigorigène F, le HCFO-1233zd peut être sous forme HCFO-1233zdE, ou sous forme d'un mélange HCFO-1233zdE et HCFO-1233zdZ.

Selon un mode de réalisation préféré, la proportion massique de HCFO-1233zdE, par rapport au total du HCFO-1233zd, est supérieure ou égale à 90 %, ou à 91 %, ou à 92 %, ou à 93 %, ou à 94 %, ou à 95 %, ou à 96 %, ou à 97 %, ou à 98 %, ou à 99 %, ou à 99,1 %, ou à 99,2 %, ou à 99,3 %, ou à 99,4 %, ou à 99,5 %, ou à 99,6 %, ou à 99,7 %, ou à 99,8 %, ou à 99,9 %, ou à 99,91 %, ou à 99,92 %, ou à 99,93 %, ou à 99,94 %, ou à 99,95 %, ou à 99,96 %, ou à 99,97 %, ou à 99,98 %, ou à 99,99 %.

La présence de composé(s) stabilisant(s) dans le fluide frigorigène F permet notamment de limiter ou d'empêcher une augmentation de la proportion de HCFO-1233zdZ dans la composition au cours du temps et/ou en cas d'application de températures relativement élevées.

Dans la composition de l'invention, la proportion massique de HCFO-1233zd peut représenter notamment de 1 à 5 % de la composition ; ou de 5 à 10 % de la composition ; ou de 10 à 15 % de la composition ; ou de 15 à 20 % de la composition ; ou de 20 à 25 % de la composition ; ou de 25 à 30 % de la composition ; ou de 30 à 35 % de la composition ; ou de 35 à 40 % de la composition ; ou de 40 à 45 % de la composition ; ou de 45 à 50 % de la composition ; ou de 50 à 55 % de la composition ; ou de 55 à 60 % de la composition ; ou de 60 à 65 % de la composition ; ou de 65 à 70 % de la composition ; ou de 70 à 75 % de la composition ; ou de 75 à 80 % de la composition ; ou de 80 à 85 % de la composition ; ou de 85 à 90 % de la composition ; ou de 90 à 95 % de la composition ; ou de 95 à 99 % de la composition ; ou de 99 à 99,5 % de la composition ; ou de 99,5 à 99,9 % de la composition ; ou plus de 99,9 % de la composition. La teneur en HCFO-1233zd peut également varier dans plusieurs des intervalles ci-dessus : par exemple de 50 à 55 % et de 55 à 60 %, c'est-à-dire de 50 à 60 %, etc.

De préférence, la composition de l'invention comprend plus de 50% en poids de HCFO-1233zd, préférentiellement de 50% à 99%.

### Lubrifiant

Selon l'invention, le lubrifiant peut comprendre un ou plusieurs esters de polyol.

Selon un mode de réalisation, les esters de polyol sont obtenus par réaction d'au moins un polyol, avec un acide carboxylique ou avec un mélange d'acides carboxyliques.

Dans le cadre de l'invention, et sauf mention contraire, on entend par « polyol », un composé contenant au moins deux groupements hydroxyles (-OH).

### Esters de polyol A)

Selon un mode de réalisation, les esters de polyol selon l'invention répondent la formule suivante (I) suivante :

R¹[OC(O)R²]ₙ (I)

dans laquelle :
- R¹ est un radical hydrocarboné, linéaire ou ramifié, éventuellement substitué par au moins un groupement hydroxyle et/ou comprenant au moins un hétéroatome choisi dans le groupe constitué de -O-, -N-, et -S- ;
- chaque R² est, indépendamment les uns des autres, choisi dans le groupe constitué de :
   ∘ i) H ;
   ∘ ii) un radical hydrocarboné aliphatique ;
   ∘ iii) un radical hydrocarboné ramifié ;
   ∘ iv) un mélange d'un radical ii) et/ou iii), avec un radical hydrocarboné aliphatique comprenant de 8 à 14 atomes de carbone ; et
- n est un entier d'au moins 2.

Dans le cadre de l'invention, on entend par radical hydrocarboné, un radical composé d'atomes de carbone et d'hydrogène.

Selon un mode de réalisation, les polyols ont la formule générale (II) suivante :

R¹(OH)ₙ (II)

dans laquelle :
- R¹ est un radical hydrocarboné, linéaire ou ramifié, éventuellement substitué par au moins un groupement hydroxyle, de préférence par deux groupements hydroxyle, et/ou comprenant au moins un hétéroatome choisi dans le groupe constitué de -O-, -N-, et -S- ; et
- n est un entier d'au moins 2.

De préférence, R¹ est un radical hydrocarboné, linéaire ou ramifié, comprenant de 4 à 40 atomes de carbone, de préférence de 4 à 20 atomes de carbone.

De préférence, R¹ est un radical hydrocarboné, linéaire ou ramifié, comprenant au moins un atome d'oxygène.

De préférence, R¹ est un radical hydrocarboné ramifié comprenant de 4 à 10 atomes de carbone, de préférence 5 atomes de carbone, substitué par deux groupements hydroxyle.

Selon un mode de réalisation préféré, les polyols comprennent de 2 à 10 groupements hydroxyle, de préférence de 2 à 6 groupements hydroxyle.

Les polyols selon l'invention peuvent comprendre un ou plusieurs groupes oxyalkylène, il s'agit dans ce cas particulier de polyétherpolyols.

Les polyols selon l'invention peuvent également comprendre un ou plusieurs atomes d'azote. Par exemple, les polyols peuvent être des alcanol amine contenant de 3 à 6 groupements OH. De préférence, les polyols sont des alcanol amine contenant au moins deux groupements OH, et de préférence au moins trois.

Selon la présente invention, les polyols préférés sont choisis dans le groupe constitué de l'éthylène glycol, du diéthylène glycol, du triéthylène glycol, du propylène glycol, du dipropylène glycol, du glycérol, du néopentyle glycol, du 1,2-butanediol, du 1,4-butanediol, du 1,3-butanediol, du pentaérythritol, du dipentaérythritol, du tripentaérythritol, du triglycérol, du triméthylolpropane, du sorbitol, de l'hexaglycérol, et de leurs mélanges.

Selon l'invention, les acides carboxyliques peuvent répondre à la formule générale (III) suivante :

R²COOH (III)

dans laquelle :
- R² est choisi dans le groupe constitué de :
   ∘ i) H ;
   ∘ ii) un radical hydrocarboné aliphatique ;
   ∘ iii) un radical hydrocarboné ramifié ;
   ∘ iv) un mélange d'un radical ii) et/ou iii), avec un radical hydrocarboné aliphatique comprenant de 8 à 14 atomes de carbone.

De préférence, R² est un radical hydrocarboné aliphatique comprenant de 1 à 10, préférentiellement de 1 à 7 atomes de carbone, et en particulier de 1 à 6 atomes de carbone.

De préférence, R² est un radical hydrocarboné ramifié comprenant de 4 à 20 atomes de carbone, en particulier de 5 à 14 atomes de carbone, et préférentiellement de 6 à 8 atomes de carbone.

Selon un mode de réalisation préféré, un radical hydrocarboné ramifié a la formule (IV) suivante :

-C(R³)R⁴)(R⁵) (IV)

dans laquelle R³, R⁴ et R⁵ sont, indépendamment les uns des autres, un groupe alkyle, et au moins un des groupes alkyle contient au minimum deux atomes de carbone. De tels groupes alkyles ramifiés, une fois liés au groupe carboxyle sont connus sous la dénomination « groupe néo», et l'acide correspondant en tant que « acide néo ». De préférence, R³ et R⁴ sont des groupes méthyles et R¹⁰ est un groupe alkyle comprenant au moins deux atomes de carbone.

Selon l'invention, le radical R² peut comprenant un ou plusieurs groupes carboxy, ou groupes ester tels que -COOR⁶, avec R⁶ représentant un radical alkyle, hydroxyalkyle ou un groupe hydroxyalkyloxy alkyle.

De préférence, l'acide R²COOH de formule (III) est un acide monocarboxylique.

Des exemples d'acides carboxyliques dans lesquels le radical hydrocarboné est aliphatique sont notamment: l'acide formique, l'acide acétique, l'acide propionique, l'acide butyrique, l'acide pentanoïque, l'acide hexanoïque et l'acide heptanoïque.

Des exemples d'acides carboxyliques dans lesquels le radical hydrocarboné est ramifié sont notamment : l'acide 2-éthyl-n-butyrique, l'acide 2-hexyldécanoïque, l'acide isostéarique, l'acide 2-méthyl-hexanoïque, l'acide 2-méthylbutanoïque, l'acide 3-méthylbutanoïque, le 3,5,5-triméthyl-hexanoïque, l'acide 2-éthylhexanoïque, l'acide néoheptanoïque, et l'acide néodécanoïque.

Le troisième type d'acides carboxyliques pouvant être utilisés dans la préparation des esters de polyols de formule (I) sont les acides carboxyliques comprenant un radical hydrocarboné aliphatique comprenant de 8 à 14 atomes de carbone. On peut par exemple citer : l'acide décanoïque, l'acide dodécanoïque, l'acide laurique, l'acide stéarique, l'acide myristique, l'acide béhénique,.. Parmi les acides dicarboxyliques, on peut citer l'acide maléïque, l'acide succinique, l'acide adipique, l'acide sébacique...

Selon un mode de réalisation préféré, les acides carboxyliques utilisés pour préparer les esters de polyols de formule (I) comprennent un mélange d'acides monocarboxyliques et dicarboxyliques, la proportion d'acides monocarboxyliques étant majoritaire. La présence d'acides dicarboxyliques résultent notamment dans la formation d'esters de polyol de viscosité élevée.

En particulier, la réaction de formation des esters de polyols de formule (I) par réaction entre l'acide carboxylique et les polyols est une réaction catalysée par un acide. Il s'agit notamment d'une réaction réversible, qui peut être complète par l'utilisation d'une large quantité d'acide ou par l'élimination de l'eau formée au cours de la réaction.

La réaction d'estérification peut être réalisée en présence d'acides organiques ou inorganiques, tels que l'acide sulfurique, l'acide phosphorique...

De préférence, la réaction est réalisée en l'absence de catalyseur.

La quantité d'acide carboxylique et de polyol peut varier dans le mélange selon les résultats désirés. Dans le cas particulier où tous les groupements hydroxyles sont estérifiés, une quantité suffisante d'acide carboxylique doit être ajoutée pour réagir avec tous les hydroxyles.

Selon un mode de réalisation, lors de l'utilisation de mélanges d'acides carboxyliques, ceux-ci peuvent réagir de manière séquentielle avec les polyols.

Selon un mode de réalisation préféré, lors de l'utilisation de mélange d'acides carboxyliques, un polyol réagit d'abord avec un acide carboxylique, typiquement l'acide carboxylique de poids moléculaire le plus élevé, suivie de la réaction avec l'acide carboxylique ayant une chaîne hydrocarbonée aliphatique.

Selon un mode de réalisation, les esters peuvent être formés par réaction entre les acides carboxyliques (ou leurs dérivés anhydrides ou esters) avec les polyols, en présence d'acides à température élevée, tout en enlevant l'eau formée au cours de la réaction. Typiquement, la réaction peut être réalisée à une température comprise de 75 à 200°C.

Selon un autre mode de réalisation, les esters de polyols formés peuvent comprendre des groupements hydroxyle n'ayant pas tous réagit, il s'agit dans ce cas d'esters de polyols partiellement estérifiés.

Selon un mode de réalisation préféré, les esters de polyol sont obtenus à partir de l'alcool pentaérythritol, et d'un mélange d'acides carboxyliques : l'acide isononanoïque, au moins un acide ayant un radical hydrocarboné aliphatique comprenant de 8 à 10 atomes de carbone, et l'acide heptanoïque. Les esters de polyol préférés sont obtenus à partir du pentaérythritol, et d'un mélange de 70% d'acide isononanoïque, de 15% d'au moins un acide carboxylique ayant un radical hydrocarboné aliphatique comprenant de 8 à 10 atomes de carbone, et 15% d'acide heptanoïque. On peut par exemple citer l'huile Solest 68 commercialisée par CPI Engineering Services Inc.

### Esters de polyol B)

Selon un autre mode de réalisation, les esters de polyols de l'invention comprennent au moins un ester d'un ou plusieurs acides carboxyliques ramifiés comprenant au plus 8 atomes de carbone. L'ester est notamment obtenu par réaction dudit acide carboxylique ramifié avec un ou plusieurs polyols.

De préférence, l'acide carboxylique ramifié comprend au moins 5 atomes de carbone. En particulier, l'acide carboxylique ramifié comprend de 5 à 8 atomes de carbone, et préférentiellement il contient 5 atomes de carbone.

De préférence, l'acide carboxylique ramifié susmentionné ne comprend pas 9 atomes de carbone. En particulier, ledit acide carboxylique n'est pas l'acide 3,5,5-triméthylhexanoïque.

Selon un mode de réalisation préféré, l'acide carboxylique ramifié est choisi parmi l'acide 2-méthylbutanoïque, l'acide 3-méthylbutanoïque, et leurs mélanges.

Selon un mode de réalisation préféré, le polyol est choisi dans le groupe constitué du néopentyle glycol, du glycérol, du triméthylol propane, du pentaérythritol, du dipentaérythritol, du tripentaerythritol, et de leurs mélanges.

Selon un mode de réalisation préféré, les esters de polyol sont obtenus à partir de :
i) un acide carboxylique choisi parmi l'acide 2-méthylbutanoïque, l'acide 3-méthylbutanoïque, et leurs mélanges ; et
ii) un polyol choisi dans le groupe constitué du néopentyle glycol, du glycérol, du triméthylol propane, du pentaérythritol, du dipentaérythritol, du tripentaerythritol, et de leurs mélanges.

De préférence, l'ester de polyol est celui obtenu à partir de l'acide 2-méthylbutanoïque et du pentaérythritol.

De préférence, l'ester de polyol est celui obtenu à partir de l'acide 2-méthylbutanoïque et du dipentaérythritol.

De préférence, l'ester de polyol est celui obtenu à partir de l'acide 3-méthylbutanoïque et du pentaérythritol.

De préférence, l'ester de polyol est celui obtenu à partir de l'acide 3-méthylbutanoïque et du dipentaérythritol.

De préférence, l'ester de polyol est celui obtenu à partir de l'acide 2-méthylbutanoïque et du néopentyle glycol.

### Esters de polyol C)

Selon un autre mode de réalisation, les esters de polyols selon l'invention sont des esters de poly(néopentylpolyol) obtenus par :
i) réaction d'un néopentylpolyol ayant la formule suivante (V): 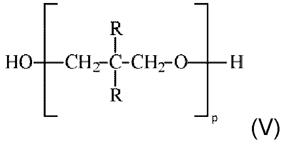 dans laquelle :
   - chaque R représente, indépendamment les uns des autres, CH₃, C₂H₅ ou CH₂OH ;
   - p est un entier allant de 1 à 4 ;
   avec au moins un acide monocarboxylique ayant de 2 à 15 atomes de carbone, et en présence d'un catalyseur acide, le ratio molaire entre les groupes carboxyles et les groupes hydroxyles étant inférieur à 1:1, pour former une composition de poly(néopentyl)polyol partiellement estérifiée; et
ii) réaction de la composition de poly(néopentyl)polyol partiellement estérifiée obtenue à l'issue de l'étape i), avec un autre acide carboxylique ayant de 2 à 15 atomes de carbone, pour former la composition finale d'ester(s) de poly(néopentylpolyol).

De préférence, la réaction i) est réalisée avec un ratio molaire allant de 1:4 à 1:2.

De préférence, le néopentylpolyol a la formule suivante (VI) : 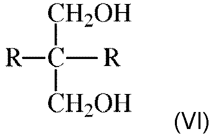 dans laquelle chaque R représente, indépendamment les uns des autres, CH₃, C₂H₅ ou CH₂OH.

Des néopentylpolyols préférés sont ceux choisis parmi le pentaérythritol, le dipentaérythritol, le tripentaérythritol, le tétraérythritol, le triméthylolpropane, le triméthyloléthane, et le néopentyle glycole. En particulier, le néopentylpolyol est le pentaérythritol.

De préférence, un unique néopentylpolyol est utilisé pour produire le lubrifiant à base de POE. Dans certains cas, deux ou plusieurs néopentylpolyols sont utilisés. C'est notamment le cas lorsque un produit commercial de pentaérythritol comprend des faibles quantités de dipentaérythritol, de tripentaérythritol, et de tétraérythritol.

Selon un mode de réalisation préféré, l'acide monocarboxylique susmentionné comprend de 5 à 11 atomes de carbone, de préférence de 6 à 10 atomes de carbone.

Les acides monocarboxyliques ont notamment la formule générale (VII) suivante :

R'C(O)OH (VII)

dans laquelle R' est un radical alkyle, linéaire ou ramifié, en C1-C12, un radical aryle en C6-C12, un radical aralkyl en C6-C30. De préférence, R' est un radical alkyle en C4-C10, et préférentiellement en C5-C9.

En particulier, l'acide monocarboxylique est choisi dans le groupe constitué de l'acide butanoïque, de l'acide pentanoïque, de l'acide hexanoïque, de l'acide heptanoïque, de l'acide n-octanoïque, de l'acide n-nonanoïque, de l'acide n-décanoïque, de l'acide 3-méthylbutanoïque, de l'acide 2-méthylbutanoïque, de l'acide 2,4-diméthylpentanoïque, de l'acide 2-éthylhexanoïque, de l'acide 3,3,5-triméthylhexanoïque, de l'acide benzoïque, et de leurs mélanges.

Selon un mode de réalisation préféré, l'acide monocarboxylique est l'acide n-heptanoïque, ou un mélange d'acide n-heptanoïque avec un autre acide monocarboxylique linéaire, en particulier l'acide n-octanoïque et/ou l'acide n-décanoïque. Un tel mélange d'acide monocarboxylique peut comprendre entre 15 et 100 mol% d'acide heptanoïque et entre 85 et 0 mol% d'autre(s) acide(s) monocarboxylique(s). En particulier, le mélange comprend entre 75 et 100 mol% d'acide heptanoïque, et entre 25 et 0 mol% d'un mélange d'acide octanoïque et d'acide décanoïque dans un ratio molaire 3 : 2.

Selon un mode de réalisation préféré, les esters de polyols comprennent :
i) de 45% à 55 % en poids d'un ester de monopentaérythritol avec au moins un acide monocarboxylique ayant de 2 à 15 atomes de carbone ;
ii) moins de 13% en poids d'un ester de dipentaérythritol avec au moins un acide monocarboxylique ayant de 2 à 15 atomes de carbone ;
iii) moins de 10% en poids d'un ester de tripentaérythritol avec au moins un acide monocarboxylique ayant de 2 à 15 atomes de carbone ; et
iv) au moins 25% en poids d'un ester de tétraérythritol et d'autres oligomères de pentaérythritol, avec au moins un acide monocarboxylique ayant de 2 à 15 atomes de carbone.

### Esters de polyol D)

Selon un autre mode de réalisation, les esters de polyol selon l'invention, ont la formule (VIII) suivante : 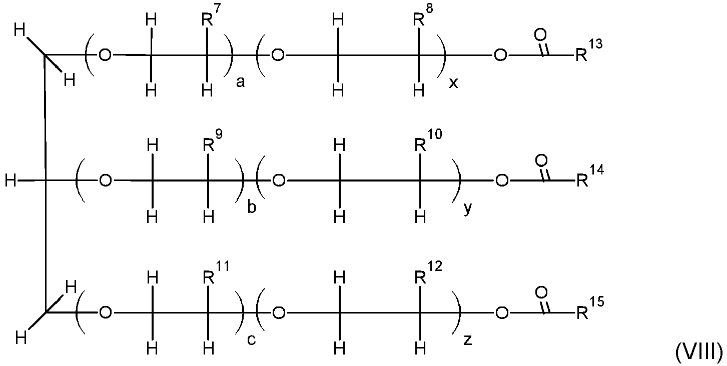 dans laquelle :
- R⁷, R⁸, R⁹, R¹⁰, R¹¹ et R¹² sont, indépendamment les uns des autres, H ou CH₃ ;
- a, b, c, y, x et z, sont, indépendamment les uns des autres, un entier ;
- a+x, b+y, et c+z sont, indépendamment les uns des autres, des entiers allant de 1 à 20 ;
- R¹³, R¹⁴ et R¹⁵ sont, indépendamment les uns des autres, choisis dans le groupe constitué des alkyles aliphatiques ou ramifiés, des alkényles, des cycloalkyles, des aryles, des alkylaryles, des arylalkyles, des alkylcycloalkyles, des cycloalkylalkyles, des arylcycloalkyles des cycloalkylaryles, des alkylcycloalkylaryles, des alkylarylcycloalkyles, des arylcycloalkylalkyles, des arylalkylcycloalkyles, des cycloalkylalkylaryl et des cycloalkylarylalkyles, R¹³, R¹⁴ et R¹⁵, ayant de 1 à 17 atomes de carbone, et pouvant être éventuellement substitués.

Selon un mode de réalisation préféré, chacun de R¹³, R¹⁴ et R¹⁵ représente, indépendamment les uns des autres, un groupe alkyle linéaire ou ramifié, un groupe alkényle, un groupe cycloalkyle, lesdits groupes alkyles, alkényles ou cycloalkyles pouvant comprendre au moins un hétéroatome choisi parmi N, O, Si, F ou S. De préférence, chacun de R¹³, R¹⁴ et R¹⁵ a, indépendamment les uns des autres, de 3 à 8 atomes de carbone, de préférence de 5 à 7 atomes de carbone.

De préférence, a+x, b+y, et c+z sont, indépendamment les uns des autres, des entiers allant de 1 à 10, préférentiellement de 2 à 8, et encore plus préférentiellement de 2 à 4.

De préférence, R⁷, R⁸, R⁹, R¹⁰, R¹¹ et R¹² représentent H.

Les esters de polyol de formule (VIII) ci-dessus peuvent typiquement être préparés tels que décrits aux paragraphes [0027] à [0030] de la demande internationale WO2012/177742.

En particulier, les esters de polyol de formule (VIII) sont obtenus par estérification d'alcoxylates de glycérol (tels que décrits au paragraphe [0027] de WO2012/177742) avec un ou plusieurs acides monocarboxyliques ayant de 2 à 18 atomes de carbone.

Selon un mode de réalisation préféré, les acides monocarboxyliques ont l'une des formules suivantes :

R¹³COOH

R¹⁴COOH et

R¹⁵COOH

dans lesquelles R¹³, R¹⁴ et R¹⁵ sont tels que définis ci-dessus. Des dérivés des acides carboxyliques peuvent également être utilisés, tels que les anhydrides, les esters et les halogénures d'acyles.

L'estérification peut être réalisée avec un ou plusieurs acides monocarboxyliques. Des acides monocarboxyliques préférés sont ceux choisis dans le groupe constitué de l'acide acétique, l'acide propanoïque, l'acide butyrique, l'acide isobutanoïque, l'acide pivalique, l'acide pentanoïque, l'acide isopentanoique, l'acide hexanoïque, l'acide heptanoïque, l'acide octanoïque, l'acide 2-éthylhexanoïque, l'acide 3,3,5-triméthylhexanoïque, l'acide nonanoïque, l'acide décanoïque, l'acide néodécanoïque, l'acide undécanoïque, l'acide dodécanoïque, l'acide tridécanoïque, l'acide myristique, l'acide pentadécanoïque, l'acide palmitique, l'acide stéarique, l'acide oléïque, l'acide linoléïque, l'acide palmitoléïque, l'acide citronellique, l'acide undécénoïque, l'acide laurique, l'acide undécylénique, l'acide linolénique, l'acide arachidique, l'acide béhénique, l'acide tétrahydrobenzoïque, l'acide abiétique hydrogéné ou non, l'acide 2-éthylhexanoïque, l'acide furoïque, l'acide benzoïque, l'acide 4-acétylbenzoïque, l'acide pyruvique, l'acide 4-tert-butyl-benzoïque, l'acide naphthenique, l'acide 2-méthyl benzoïque, l'acide salicylique, leurs isomères, leurs esters méthyliques, et leurs mélanges.

De préférence, l'estérification est réalisée avec un ou plusieurs acides monocarboxyliques choisis dans le groupe constitué de l'acide pentanoïque, l'acide 2-méthylbutanoïque, l'acide n-hexanoïque, l'acide n-heptanoïque, le 3,3,5-triméthylhexanoïque, l'acide 2-éthylhexanoïque, l'acide n-octanoïque, l'acide n-nonanoïque et l'acide isononanoïque.

De préférence, l'estérification est réalisée avec un ou plusieurs acides monocarboxyliques choisis dans le groupe constitué de l'acide butyrique, l'acide isobutyrique, l'acide n-pentanoïque, l'acide 2-méthylbutanoïque, l'avide 3-méthylbutanoïque, l'avide n-hexanoïque, l'avide n-heptanoïque, l'acide n-octanoïque, l'acide 2-éthylhexanoïque, l'acide 3,3,5-triméthylhexanoïque, l'acide n-nonanoïque, l'acide décanoïque, l'acide undécanoïque, l'acide undécélénique, l'acide laurique, l'acide stéarique, l'acide isostéarique, et leurs mélanges.

Selon un autre mode de réalisation, les esters de polyol selon l'invention, ont la formule (IX) suivante : 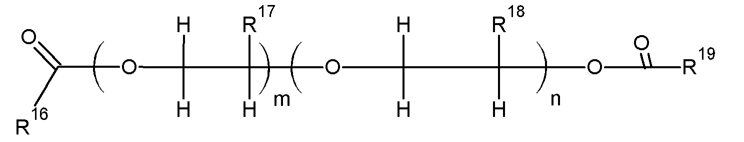 dans laquelle :
- chacun de R¹⁷ et R¹⁸, est, indépendamment l'un de l'autre, H ou CH₃ ;
- chacun de m et n, est, indépendamment l'un de l'autre, un entier, avec m+n, étant un entier allant de 1 à 10 ;
- R¹⁶ et R¹⁹ sont, indépendamment l'un de l'autre, choisis dans le groupe constitué des alkyles aliphatiques ou ramifiés, des alkényles, des cycloalkyles, des aryles, des alkylaryles, des arylalkyles, des alkylcycloalkyles, des cycloalkylalkyles, des arylcycloalkyles des cycloalkylaryles, des alkylcycloalkylaryles, des alkylarylcycloalkyles, des arylcycloalkylalkyles, des arylalkylcycloalkyles, des cycloalkylalkylaryl et des cycloalkylarylalkyles,
   R¹⁶ et R¹⁹, ayant de 1 à 17 atomes de carbone, et pouvant être éventuellement substitués.

Selon un mode de réalisation préféré, chacun de R¹⁶ et R¹⁹ représente, indépendamment l'un de l'autre, un groupe alkyle linéaire ou ramifié, un groupe alkényle, un groupe cycloalkyle, lesdits groupes alkyles, alkényles ou cycloalkyles pouvant comprendre au moins un hétéroatome choisi parmi N, O, Si, F ou S. De préférence, chacun de R¹⁶ et R¹⁹ a, indépendamment l'un de l'autre, de 3 à 8 atomes de carbone, de préférence de 5 à 7 atomes de carbone.

Selon un mode de réalisation préféré, chacun de R¹⁷ et R¹⁸ représente H, et/ou m+n est un entier allant de 2 à 8, de 4 à 10, de 2 à 5, ou de 3 à 5. En particulier, m+n vaut 2, 3 ou 4.

Selon un mode de réalisation préféré, les esters de polyol de formule (IX) ci-dessus sont des diesters de triéthylène glycol, des diesters de tétraéthylène glycol, en particulier avec un ou deux acides monocarboxyliques ayant de 4 à 9 atomes de carbone.

Les esters de polyol de formule (IX) ci-dessus peuvent être préparés par estérifications d'un éthylène glycol, d'un propylène glycol, ou d'un oligo- ou polyalkylène glycol, (qui peut être un oligo- ou polyéthylène glycol, oligo- ou polypropylène glycol, ou un copolymère à bloc éthylène glycol-propylène glycol), avec un ou deux acides monocarboxyliques ayant de 2 à 18 atomes de carbone. L'estérification peut être réalisée de manière identique à la réaction d'estérification mise en œuvre pour préparer les esters de polyols de formule (VIII) ci-dessus.

En particulier, des acides monocarboxyliques identiques à ceux utilisés pour préparer les esters de polyol de formule (VIII) ci-dessus, peuvent être utilisés pour former les esters de polyol de formule (IX).

Selon un mode de réalisation, le lubrifiant à base d'esters de polyol selon l'invention, comprend de 20 à 80%, de préférence de 30 à 70%, et préférentiellement de 40 à 60% en poids d'au moins un ester de polyol de formule (VIII), et de 80 à 20%, de préférence de 70 à 30%, et préférentiellement de 60 à 40% en poids d'au moins un ester de polyol de formule (IX).

De manière générale, certaines fonctions alcools peuvent ne pas être estérifiées lors de la réaction d'estérification, cependant leur proportion reste faible. Ainsi, les POE peuvent comprendre entre 0 et5% molaire relatif de motifs CH₂OH par rapport aux motifs -CH₂-O-C(=O)-.

Les lubrifiants POE préférés selon l'invention sont ceux ayant une viscosité de 1 à 1000 centiStokes (cSt) à 40°C, de préférence de 10 à 200 cSt, encore plus préférentiellement de 20 à 100 cSt, et avantageusement de 30 à 80 cSt.

La classification internationale des huiles est donnée par la norme ISO3448 (NF T60-141) et d'après laquelle les huiles sont désignées par leur classe de viscosité moyenne mesurée à la température de 40°C.

### Composition

Dans la composition de l'invention, la proportion massique de fluide frigorigène F peut représenter notamment de 1 à 5 % de la composition ; ou de 5 à 10 % de la composition ; ou de 10 à 15 % de la composition ; ou de 15 à 20 % de la composition ; ou de 20 à 25 % de la composition ; ou de 25 à 30 % de la composition ; ou de 30 à 35 % de la composition ; ou de 35 à 40 % de la composition ; ou de 40 à 45 % de la composition ; ou de 45 à 50 % de la composition ; ou de 50 à 55 % de la composition ; ou de 55 à 60 % de la composition ; ou de 60 à 65 % de la composition ; ou de 65 à 70 % de la composition ; ou de 70 à 75 % de la composition ; ou de 75 à 80 % de la composition ; ou de 80 à 85 % de la composition ; ou de 85 à 90 % de la composition ; ou de 90 à 95 % de la composition ; ou de 95 à 99 % de la composition ; ou de 99 à 99,5 % de la composition ; ou de 99,5 à 99,9 % de la composition ; ou plus de 99,9 % de la composition. La teneur en fluide frigorigène F peut également varier dans plusieurs des intervalles ci-dessus : par exemple de 50 à 55%, et de 55 à 60%, c'est-à-dire de 50 à 60%, etc..

Selon un mode de réalisation préféré, la composition de l'invention comprend plus de 50% en poids de fluide frigorigène F, et en particulier de 50% à 99% en poids, par rapport au poids total de la composition.

Dans la composition de l'invention, la proportion massique de lubrifiant à base d'esters de polyol (POE) peut représenter notamment de 1 à 5 % de la composition ; ou de 5 à 10 % de la composition ; ou de 10 à 15 % de la composition ; ou de 15 à 20 % de la composition ; ou de 20 à 25 % de la composition ; ou de 25 à 30 % de la composition ; ou de 30 à 35 % de la composition ; ou de 35 à 40 % de la composition ; ou de 40 à 45 % de la composition ; ou de 45 à 50 % de la composition ; ou de 50 à 55 % de la composition ; ou de 55 à 60 % de la composition ; ou de 60 à 65 % de la composition ; ou de 65 à 70 % de la composition ; ou de 70 à 75 % de la composition ; ou de 75 à 80 % de la composition ; ou de 80 à 85 % de la composition ; ou de 85 à 90 % de la composition ; ou de 90 à 95 % de la composition ; ou de 95 à 99 % de la composition ; ou de 99 à 99,5 % de la composition ; ou de 99,5 à 99,9 % de la composition ; ou plus de 99,9 % de la composition. La teneur en lubrifiant peut également varier dans plusieurs des intervalles ci-dessus : par exemple de 50 à 55%, et de 55 à 60%, c'est-à-dire de 50 à 60%, etc.. Par exemple, la teneur en lubrifiant représente entre 10 et 50% en poids de la composition.

Selon un mode de réalisation, la composition selon l'invention comprend :
- un fluide frigorigène F comprenant du 1-chloro-3,3,3-trifluoropropène (HCFO-1233zd), et éventuellement un composé stabilisant alcène en C3 à C6 et comportant une seule double liaison tel que décrit ci-dessus; et
- au moins un lubrifiant à base d'esters de polyol (POE), notamment choisi parmi les esters de polyol A), B), C) ou D) décrits ci-dessus, notamment les esters de polyol de formules (I), (VIII) ou (XI).

Selon un mode de réalisation préféré, la composition comprend :
- un fluide frigorigène F comprenant du 1-chloro-3,3,3-trifluoropropène (HCFO-1233zd), la proportion massique de HCFO-1233zdE, par rapport au total du HCFO-1233zd, étant en particulier supérieure ou égale à 95 %, ou à 99 %, ou à 99,9 %,
   et un composé stabilisant choisi parmi le 2-méthyl-but-2-ène et le 3-méthyl-but-2-ène ; et
- au moins un lubrifiant à base d'esters de polyol, notamment de formule (I).

La composition selon l'invention peut comprendre un ou plusieurs additifs (qui ne sont essentiellement pas des composés de transfert de chaleur pour l'application envisagée).

Les additifs peuvent notamment être choisis parmi les nanoparticules, les stabilisants (différents des composés stabilisants de l'invention), les tensioactifs, les agents traceurs, les agents fluorescents, les agents odorants et les agents de solubilisation.

De préférence, les additifs ne sont pas des lubrifiants.

Selon un mode de réalisation, la composition de l'invention est une composition de transfert de chaleur.

Selon un mode de réalisation préféré, la présente invention concerne une composition de transfert de chaleur comprenant :
- un fluide frigorigène F comprenant du 1-chloro-3,3,3-trifluoropropène (HCFO-1233zd),
- au moins un lubrifiant à base d'esters de polyol (POE) ; et
- au moins un additif choisi parmi les nanoparticules, les stabilisants (différents des composés stabilisants de l'invention), les tensioactifs, les agents traceurs, les agents fluorescents, les agents odorants et les agents de solubilisation.

Le ou les stabilisants, lorsqu'ils sont présents, représentent de préférence au plus 5 % en masse dans la composition de transfert de chaleur. Parmi les stabilisants, on peut citer notamment le nitrométhane, l'acide ascorbique, l'acide téréphtalique, les azoles tels que le tolutriazole ou le benzotriazole, les composés phénoliques tels que le tocophérol, l'hydroquinone, le t-butyl hydroquinone, le 2,6-di-ter-butyl-4-méthylphénol, les époxydes (alkyl éventuellement fluoré ou perfluoré ou alkényl ou aromatique) tels que les n-butyl glycidyl éther, hexanediol diglycidyl éther, allyl glycidyl éther, butylphénylglycidyl éther, les phosphites, les phosphonates, les thiols et les lactones.

A titre de nanoparticules on peut notamment utiliser les nanoparticules de charbon, les oxydes métalliques (cuivre, aluminium), TiO₂, Al₂O₃, MoS₂...

A titre d'agents traceurs (susceptibles d'être détectés), on peut citer les hydrofluorocarbures deutérés ou non, les hydrocarbures deutérés, les perfluorocarbures, les fluoroéthers, les composés bromés, les composés iodés, les alcools, les aldéhydes, les cétones, le protoxyde d'azote et les combinaisons de ceux-ci. L'agent traceur est différent du ou des composés de transfert de chaleur composant le fluide de transfert de chaleur (fluide frigorigène F).

A titre d'agents de solubilisation, on peut citer les hydrocarbures, le diméthyléther, les polyoxyalkylène éthers, les amides, les cétones, les nitriles, les chlorocarbures, les esters, les lactones, les aryl éthers, les fluoroéthers et les 1,1,1-trifluoroalcanes. L'agent de solubilisation est différent du ou des composés de transfert de chaleur composant le fluide de transfert de chaleur (fluide frigorigène F).

A titre d'agents fluorescents, on peut citer les naphthalimides, les perylènes, les coumarines, les anthracènes, les phénanthracènes, les xanthènes, les thioxanthènes, les naphthoxanhtènes, les fluorescéines et les dérivés et combinaisons de ceux-ci.

A titre d'agents odorants, on peut citer les alkylacrylates, les allylacrylates, les acides acryliques, les acrylesters, les alkyléthers, les alkylesters, les alcynes, les aldéhydes, les thiols, les thioéthers, les disulfures, les allylisothiocyanates, les acides alcanoïques, les aminés, les norbornènes, les dérivés de norbornènes, le cyclohexène, les composés aromatiques hétérocycliques, l'ascaridole, l'o-méthoxy(méthyl)-phénol et les combinaisons de ceux-ci.

La composition selon l'invention peut également comprendre au moins un autre composé de transfert de chaleur, en plus du HCFO-1233zd. Un tel autre composé de transfert de chaleur optionnel peut être notamment un composé hydrocarbure, éther, hydrofluoroéther, hydrofluorocarbure, hydrochlorofluorocarbure, hydrofluorooléfine, hydrochlorooléfine ou hydrochlorofluorooléfine.

A titre d'exemple, ledit autre composé de transfert de chaleur peut être choisi parmi le 1,1,1,4,4,4-hexafluorobut-2-ène (HFO-1336mmz, isomère E ou Z), le 3,3,4,4,4-pentafluorobut-1-ène (HFO-1345fz), le 2,4,4,4-tétrafluorobut-1-ène (HFO-1354mfy), le 1,1,1,3,3-pentafluoropropane (HFC-245fa), le 2,3,3,3-tétrafluoropropène (HFO-1234yf), le 1,3,3,3-tétrafluoropropène (HFO-1234ze), le difluorométhane (HFC-32), le 1,1,1,2-tétrafluoroéthane (HFC-134a), le 1,1,2,2-tétrafluoroéthane (HFC-134), le 1,1-difluoroéthane (HFC-152a), le pentafluoroéthane (HFC-125), le 1,1,1,3,3-pentafluorobutane (HFC-365mfc), le méthoxynonafluorobutane (HFE7100), le butane (HC-600), le 2-méthylbutane (HC-601a), le pentane (HC-601), l'éthyl éther, le méthyl acétate et les combinaisons de ceux-ci.

Par « *composé de transfert de chaleur*»*,* respectivement « *fluide de transfert de chaleur*» ou «fluide frigorigène », on entend un composé, respectivement un fluide, susceptible d'absorber de la chaleur en s'évaporant à basse température et basse pression et de rejeter de la chaleur en se condensant à haute température et haute pression, dans un circuit de compression de vapeur. De manière générale, un fluide de transfert de chaleur peut comprendre un seul, deux, trois ou plus de trois composés de transfert de chaleur. En particulier, le fluide frigorigène F est un fluide de transfert de chaleur.

Par «*composition de transfert de chaleur* »*,* on entend une composition comprenant un fluide de transfert de chaleur et éventuellement un ou plusieurs additifs qui ne sont pas des composés de transfert de chaleur pour l'application envisagée. En particulier, la composition selon l'invention est une composition de transfert de chaleur.

### Utilisations

La présente invention concerne également l'utilisation de la composition susmentionnée, en tant que composition de transfert de chaleur, dans un circuit de compression de vapeur.

La présente invention concerne l'utilisation de la composition selon l'invention, en tant que composition de transfert de chaleur dans un système de compression de vapeur, ou dans un moteur thermique.

La présente invention concerne également un procédé de transfert de chaleur reposant sur l'utilisation d'une installation comprenant un système de compression de vapeur qui contient la composition de l'invention en tant que composition de transfert de chaleur. Le procédé de transfert de chaleur peut être un procédé de chauffage ou de refroidissement d'un fluide ou d'un corps.

Selon un mode de réalisation, le système de compression de vapeur est :
- un système de climatisation ; ou
- un système de réfrigération ; ou
- un système de congélation ; ou
- un système de pompe à chaleur.

La composition de l'invention peut aussi être utilisée dans un procédé de production de travail mécanique ou d'électricité, notamment conformément à un cycle de Rankine.

L'invention concerne également une installation de transfert de chaleur comprenant un circuit de compression de vapeur contenant la composition ci-dessus en tant que composition de transfert de chaleur.

Selon un mode de réalisation, cette installation est choisie parmi les installations mobiles ou stationnaires de réfrigération, de chauffage (pompe à chaleur), de climatisation et de congélation, et les moteurs thermiques.

Il peut s'agir notamment d'une installation de pompe à chaleur, auquel cas le fluide ou corps que l'on chauffe (généralement de l'air et éventuellement un ou plusieurs produits, objets ou organismes) est situé dans un local ou un habitacle de véhicule (pour une installation mobile). Selon un mode de réalisation préféré, il s'agit d'une installation de climatisation, auquel cas le fluide ou corps que l'on refroidit (généralement de l'air et éventuellement un ou plusieurs produits, objets ou organismes) est situé dans un local ou un habitacle de véhicule (pour une installation mobile). Il peut s'agir d'une installation de réfrigération ou d'une installation de congélation (ou installation cryogénique), auquel cas le fluide ou corps que l'on refroidit comprend généralement de l'air et un ou plusieurs produits, objets ou organismes, situés dans un local ou un contenant.

L'invention a également pour objet un procédé de chauffage ou de refroidissement d'un fluide ou d'un corps au moyen d'un système de compression de vapeur contenant une composition de transfert de chaleur, ledit procédé comprenant successivement l'évaporation de la composition de transfert de chaleur, la compression de la composition de transfert de chaleur, la condensation de la composition de transfert de chaleur et la détente de la composition de transfert de chaleur, dans lequel la composition de transfert de chaleur est la composition décrite ci-dessus.

L'invention a également pour objet un procédé de production d'électricité au moyen d'un moteur thermique, ledit procédé comprenant successivement l'évaporation de la composition de transfert de chaleur, la détente de la composition de transfert de chaleur dans une turbine permettant de générer de l'électricité, la condensation de la composition de transfert de chaleur et la compression de la composition de transfert de chaleur, dans lequel la composition de chaleur est la composition décrite ci-dessus.

Le circuit de compression de vapeur contenant une composition de transfert de chaleur comprend au moins un évaporateur, un compresseur, un condenseur et un détendeur, ainsi que des lignes de transport de fluide de transfert de chaleur entre ces éléments. L'évaporateur et le condenseur comprennent un échangeur de chaleur permettant un échange de chaleur entre la composition de transfert de chaleur et un autre fluide ou corps.

A titre de compresseur, on peut utiliser notamment un compresseur centrifuge à un ou plusieurs étages ou un mini-compresseur centrifuge. Les compresseurs rotatifs, à piston ou à vis peuvent aussi être utilisés. Le compresseur peut être entraîné par un moteur électrique ou par une turbine à gaz (par exemple alimentée par les gaz d'échappement d'un véhicule, pour les applications mobiles) ou par engrenage.

Un compresseur centrifuge est caractérisé en ce qu'il utilise des éléments rotatifs pour accélérer radialement la composition de transfert de chaleur ; il comprend typiquement au moins un rotor et un diffuseur logés dans une enceinte. La composition de transfert de chaleur est introduite au centre du rotor et circule vers la périphérie du rotor en subissant une accélération. Ainsi, d'une part la pression statique augmente dans le rotor, et surtout d'autre part au niveau du diffuseur, la vitesse est convertie en augmentation de la pression statique. Chaque ensemble rotor/diffuseur constitue un étage du compresseur. Les compresseurs centrifuges peuvent comprendre de 1 à 12 étages, selon la pression finale souhaitée et le volume de fluide à traiter.

Le taux de compression est défini comme étant le rapport de la pression absolue de la composition de transfert de chaleur en sortie sur la pression absolue de ladite composition à l'entrée.

La vitesse de rotation pour les grands compresseurs centrifuges va de 3000 à 7000 tours par minute. Les petits compresseurs centrifuges (ou mini-compresseurs centrifuges) fonctionnent généralement à une vitesse de rotation qui va de 40000 à 70000 tours par minute et comportent un rotor de petite taille (généralement moins de 0,15 m).

On peut utiliser un rotor à plusieurs étages pour améliorer l'efficacité du compresseur et limiter le coût énergétique (par rapport à un rotor à un seul étage). Pour un système à deux étages, la sortie du premier étage du rotor alimente l'entrée du second rotor. Les deux rotors peuvent être montés sur un axe unique. Chaque étage peut fournir un taux de compression du fluide d'environ 4 sur 1, c'est-à-dire que la pression absolue de sortie peut être égale à environ quatre fois la pression absolue à l'aspiration. Des exemples de compresseurs centrifuges à deux étages, en particulier pour les applications automobiles, sont décrits dans les documents US 5,065,990 et US 5,363,674.

Le compresseur centrifuge peut être entraîné par un moteur électrique ou par une turbine à gaz (par exemple alimentée par les gaz d'échappement d'un véhicule, pour les applications mobiles) ou par engrenage.

L'installation peut comprendre un couplage du détendeur avec une turbine pour générer de l'électricité (cycle de Rankine).

L'installation peut également éventuellement comprendre au moins un circuit de fluide caloporteur utilisé pour transmettre la chaleur (avec ou sans changement d'état) entre le circuit de la composition de transfert de chaleur et le fluide ou corps à chauffer ou refroidir.

L'installation peut également éventuellement comprendre deux circuits de compression de vapeur (ou plus), contenant des compositions de transfert de chaleur identiques ou distincts. Par exemple, les circuits de compression de vapeur peuvent être couplés entre eux.

Le circuit de compression de vapeur fonctionne selon un cycle classique de compression de vapeur. Le cycle comprend le changement d'état de la composition de transfert de chaleur d'une phase liquide (ou diphasique liquide / vapeur) vers une phase vapeur à une pression relativement faible, puis la compression de la composition en phase vapeur jusqu'à une pression relativement élevée, le changement d'état (condensation) de la composition de transfert de chaleur de la phase vapeur vers la phase liquide à une pression relativement élevée, et la réduction de la pression pour recommencer le cycle.

Dans le cas d'un procédé de refroidissement, de la chaleur issue du fluide ou du corps que l'on refroidit (directement ou indirectement, via un fluide caloporteur) est absorbée par la composition de transfert de chaleur, lors de l'évaporation de cette dernière, et ce à une température relativement faible par rapport à l'environnement. Les procédés de refroidissement comprennent les procédés de climatisation (avec des installations mobiles, par exemple dans des véhicules, ou stationnaires), de réfrigération et de congélation ou de cryogénie.

Dans le cas d'un procédé de chauffage, de la chaleur est cédée (directement ou indirectement, via un fluide caloporteur) de la composition de transfert de chaleur, lors de la condensation de celle-ci, au fluide ou au corps que l'on chauffe, et ce à une température relativement élevée par rapport à l'environnement. L'installation permettant de mettre en œuvre le transfert de chaleur est appelée dans ce cas « pompe à chaleur ».

Il est possible d'utiliser tout type d'échangeur de chaleur pour la mise en œuvre des compositions de transfert de chaleur selon l'invention, et notamment des échangeurs de chaleur à co-courant ou, de préférence, des échangeurs de chaleur à contre-courant.

Toutefois, selon un mode de réalisation préféré, l'invention prévoit que les procédés de refroidissement et de chauffage, et les installations correspondantes, comprennent un échangeur de chaleur à contre-courant, soit au condenseur, soit à l'évaporateur. En effet, les compositions de transfert de chaleur selon l'invention sont particulièrement efficaces avec des échangeurs de chaleur à contre-courant. De préférence, à la fois l'évaporateur et le condenseur comprennent un échangeur de chaleur à contre-courant.

Selon l'invention, par « échangeur de chaleur à contre-courant », on entend un échangeur de chaleur dans lequel de la chaleur est échangée entre un premier fluide et un deuxième fluide, le premier fluide à l'entrée de l'échangeur échangeant de la chaleur avec le deuxième fluide à la sortie de l'échangeur, et le premier fluide à la sortie de l'échangeur échangeant de la chaleur avec le deuxième fluide à l'entrée de l'échangeur.

Par exemple, les échangeurs de chaleur à contre-courant comprennent les dispositifs dans lesquels le flux du premier fluide et le flux du deuxième fluide sont dans des directions opposées, ou quasiment opposées. Les échangeurs fonctionnant en mode courant croisé à tendance contre-courant sont également compris parmi les échangeurs de chaleur à contre-courant au sens de la présente demande.

Dans des procédés de « réfrigération à basse température », la température d'entrée de la composition de transfert de chaleur à l'évaporateur est de préférence de -45°C à -15°C, notamment de -40°C à -20°C, de manière plus particulièrement préférée de -35°C à -25°C et par exemple d'environ -30°C ; et la température du début de la condensation de la composition de transfert de chaleur au condenseur est de préférence de 25°C à 80°C, notamment de 30°C à 60°C, de manière plus particulièrement préférée de 35°C à 55°C et par exemple d'environ 40°C.

Dans des procédés de « refroidissement à température modérée », la température d'entrée de la composition de transfert de chaleur à l'évaporateur est de préférence de -20°C à 10°C, notamment de -15°C à 5°C, de manière plus particulièrement préférée de -10°C à 0°C et par exemple d'environ -5°C ; et la température du début de la condensation de la composition de transfert de chaleur au condenseur est de préférence de 25°C à 80°C, notamment de 30°C à 60°C, de manière plus particulièrement préférée de 35°C à 55°C et par exemple d'environ 50°C. Ces procédés peuvent être des procédés de réfrigération ou de climatisation.

Dans des procédés de « chauffage à température modérée », la température d'entrée de la composition de transfert de chaleur à l'évaporateur est de préférence de -20°C à 10°C, notamment de -15°C à 5°C, de manière plus particulièrement préférée de -10°C à 0°C et par exemple d'environ -5°C ; et la température du début de la condensation de la composition de transfert de chaleur au condenseur est de préférence de 25°C à 80°C, notamment de 30°C à 60°C, de manière plus particulièrement préférée de 35°C à 55°C et par exemple d'environ 50°C.

Dans des procédés de « chauffage haute température », la température d'entrée de la composition de transfert de chaleur à l'évaporateur est de préférence de -20°C à 90°C, notamment de 10°C à 90°C, de manière plus particulièrement préférée de 50°C à 90°C et par exemple d'environ 80°C ; et la température du début de la condensation de la composition de transfert de chaleur au condenseur est de préférence de 70°C à 160°C, notamment de 90°C à 150°C, de manière plus particulièrement préférée de 110°C à 140°C et par exemple d'environ 135°C.

Les compositions selon l'invention sont particulièrement intéressantes dans le transport frigorifique.

Il est considéré comme transport frigorifique tout déplacement de produits périssables sous espace réfrigéré. Les produits alimentaires ou pharmaceutiques représentent une partie importante des produits périssables.

Le transport frigorifique peut être effectué par camion, rail ou bateau, éventuellement à l'aide des containers multi-plateformes qui s'adaptent aussi bien sur les camions, les rails ou les bateaux.

Dans le transport frigorifique, la température des espaces réfrigérés est comprise entre -30°C et 16°C. La charge en réfrigérant dans le transport par camion, rail ou containers multi-plateforme varie entre 4 kg et 8 kg de réfrigérant. Les installations dans les bateaux peuvent contenir entre 100 et 500kg.

Le réfrigérant le plus utilisé à ce jour est le R404A.

Les températures de fonctionnement des installations frigorifiques sont fonction des besoins en température de réfrigération et des conditions climatiques extérieures. Une même installation frigorifique doit être capable de couvrir une large gamme de température comprise entre -30°C et 16°C et opérer aussi bien dans des climats froid que chaud.

La condition la plus contraignante en température d'évaporation est -30°C.

De préférence également, dans l'installation selon l'invention, la température de la composition utilisée en tant que composition de transfert de chaleur reste supérieure à la température de solidification du composé stabilisant tel que défini ci-dessus, afin d'éviter tout dépôt de matière solide dans le circuit.

Tous les modes de réalisation décrits ci-dessus peuvent être combinés les uns avec les autres. Ainsi, chaque composé préféré de la composition peut être combiné avec chaque ester de polyol préféré (esters A, B, C ou D), dans les différentes proportions mentionnées. Les différentes compositions préférées peuvent être utilisées dans les diverses applications décrites ci-dessus.

Les exemples suivants illustrent l'invention sans toutefois la limiter.

### EXEMPLES

Les essais de stabilité thermique ont été effectués selon la norme ASHRAE 97-2007: "sealed glass tube method to test the chemical stability of materials for use within refrigerant systems".

Les conditions de test sont les suivantes :
masse de fluide (avec stabilisant) : 2 g
masse de lubrifiant : 5 g
air sec : 0.2 milli-moles
température : 180°C
durée : 14 jours
2 lubrifiants commerciaux ont été testés :
   - l'huile PVE Bitzer 32 (Bitzer/Idemitsu) ;
   - l'huile Solest 68 (CPI Engineering services inc).

Le fluide frigorigène F comprend :
- 0,5% en poids de 2-méthyl-2-butène ; et
- 99,5% en poids de HCFO-1233zd.

Le lubrifiant a été introduit dans un tube en verre de 16 ml. Le tube a ensuite été tiré sous vide puis le fluide F y a été ajouté ainsi que l'air. Le tube a alors été soudé pour le fermer et placé dans une étuve à 180°C pendant 14 jours.

En fin de test, la phase gaz a été récupérée pour être analysée par chromatographie phase gazeuse : les principales impuretés ont été identifiées par GC/MS (chromatographie phase gazeuse couplée spectrométrie de masse).

| | | Invention | | Comparatif | |
|---|---|---|---|---|---|
| Huile | | Solest 68 | | PVE Bitzer 32 | |
| % molaire | HFO-1233zdE | 98,691 | 92,623 | 88,194 | 90,070 |
| | HFO-1233zdZ | 0,039 | 0,040 | 0,035 | 0,034 |
| | 2-méthyl-2-butène | 0,838 | 0,860 | 0,924 | 0,944 |
| | Impuretés d'origine (dans le fluide frigorigène, avant mélange avec le lubrifiant) | < 0,1 | < 0,1 | < 0,1 | < 0,1 |
| | **Nouvelles impuretés** | **0,387** | **0,420** | **10,748** | **8,87** |

L'analyse CG montre la formation d'un pourcentage très élevé de nouvelles impuretés (supérieurs à 8% molaire) avec l'huile PVE par rapport à un très faible pourcentage avec l'huile POE (inférieur à 0,5% molaire).

Ainsi, les essais montrent que le mélange HFO-1233zd/huile POE est plus stable thermiquement que le mélange HFO-1233zd/ huile PVE.

## Revendications

1. Composition comprenant au moins un lubrifiant à base d'esters de polyol, et un fluide frigorigène F comprenant du 1-chloro-3,3,3-trifluoropropène et au moins un composé stabilisant alcène en C3 à C6 et comportant une seule double liaison .

2. Composition selon la revendication 1, dans laquelle le composé stabilisant, est choisi dans le groupe constitué du but-1-ène ; du cis-but-2-ène ; du transbut-2-ène ; du 2-méthylprop-1-ène ; du pent-1-ène ; du cis-pent-2-ène ; du trans-pent-2-ène ; du 2-méthylbut-1-ène ; du 2-méthylbut-2-ène ; du 3-méthylbut-1-ène, et de leurs mélanges.

3. Composition selon la revendication 1, dans laquelle le composé stabilisant est choisi parmi le 2-méthyl-but-2-ène et le 3-méthyl-but-1-ène.

4. Composition selon l'une quelconque des revendications 1 à 3, dans laquelle le 1-chloro-3,3,3-trifluoropropène est sous forme trans dans une proportion massique supérieure ou égale à 90 %, de préférence supérieure ou égale à 95 %, préférentiellement supérieure ou égale à 99 %, idéalement supérieure ou égale à 99,5 %, voire supérieure à 99,9 %.

5. Composition selon l'une quelconque des revendications 1 à 4, dans laquelle les esters de polyol répondent la formule suivante (I) suivante :
R¹[OC(O)R²]ₙ (I)
dans laquelle :
- R¹ est un radical hydrocarboné, linéaire ou ramifié, éventuellement substitué par au moins un groupement hydroxyle et/ou comprenant au moins un hétéroatome choisi dans le groupe constitué de -O-, -N-, et -S- ;
- chaque R² est, indépendamment les uns des autres, choisi dans le groupe constitué de :
∘ i) H ;
∘ ii) un radical hydrocarboné aliphatique ;
∘ iii) un radical hydrocarboné ramifié ;
∘ iv) un mélange d'un radical ii) et/ou iii), avec un radical hydrocarboné aliphatique comprenant de 8 à 14 atomes de carbone ; et
- n est un entier d'au moins 2.

6. Composition selon l'une quelconque des revendications 1 à 4, dans laquelle les esters de polyol sont obtenus à partir de polyol choisi dans le groupe constitué du néopentyle glycol, du glycérol, du triméthylol propane, du pentaérythritol, du dipentaérythritol, du tripentaerythritol, et de leurs mélanges.

7. Composition selon l'une quelconque des revendications 1 à 4 et 6, dans laquelle les esters de polyol sont obtenus à partir d'au moins un acide carboxylique ramifié comprenant de 5 à 8 atomes de carbone.

8. Composition selon l'une quelconque des revendications 1 à 4, dans laquelle les esters de polyol sont des esters de poly(néopentylpolyol) obtenus par :
i) réaction d'un néopentylpolyol ayant la formule suivante (V): 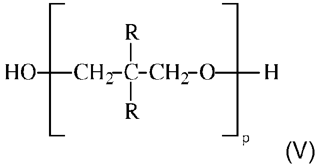 dans laquelle :
∘ chaque R représente, indépendamment les uns des autres, CH₃, C₂H₅ ou CH₂OH ;
∘ p est un entier allant de 1 à 4 ;
avec au moins un acide monocarboxylique ayant de 2 à 15 atomes de carbone, en présence d'un catalyseur acide, le ratio molaire entre les groupes carboxyles et les groupes hydroxyles étant inférieur à 1:1, pour former une composition de poly(néopentyl)polyol partiellement estérifiée; et
ii) réaction de la composition de poly(néopentyl)polyol partiellement estérifiée obtenue à l'issue de l'étape i), avec un autre acide carboxylique ayant de 2 à 15 atomes de carbone, pour former la composition d'esters de poly(néopentylpolyol).

9. Composition selon l'une quelconque des revendications 1 à 4, dans laquelle les esters de polyol ont l'une des formules (VIII) ou (IX) suivantes : 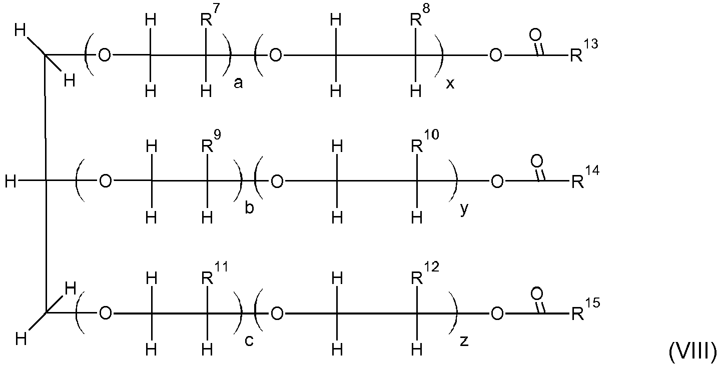 dans laquelle :
- R⁷, R⁸, R⁹, R¹⁰, R¹¹ et R¹² sont, indépendamment les uns des autres, H ou CH₃ ;
- a, b, c, y, x et z, sont, indépendamment les uns des autres, un entier ;
- a+x, b+y, et c+z sont, indépendamment les uns des autres, des entiers allant de 1 à 20 ;
- R¹³, R¹⁴ et R¹⁵ sont, indépendamment les uns des autres, choisis dans le groupe constitué des alkyles aliphatiques ou ramifiés, des alkényles, des cycloalkyles, des aryles, des alkylaryles, des arylalkyles, des alkylcycloalkyles, des cycloalkylalkyles, des arylcycloalkyles des cycloalkylaryles, des alkylcycloalkylaryles, des alkylarylcycloalkyles, des arylcycloalkylalkyles, des arylalkylcycloalkyles, des cycloalkylalkylaryl et des cycloalkylarylalkyles, R¹³, R¹⁴ et R¹⁵, ayant de 1 à 17 atomes de carbone, et pouvant être éventuellement substitués.
ou 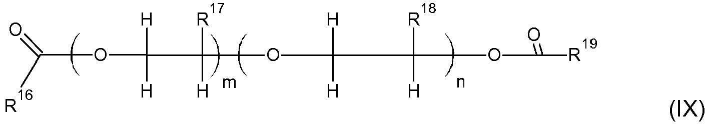 dans laquelle :
- chacun de R¹⁷ et R¹⁸, est, indépendamment l'un de l'autre, H ou CH₃ ;
- chacun de m et n, est, indépendamment l'un de l'autre, un entier, avec m+n, étant un entier allant de 1 à 10 ;
- R¹⁶ et R¹⁹ sont, indépendamment l'un de l'autre, choisis dans le groupe constitué des alkyles aliphatiques ou ramifiés, des alkényles, des cycloalkyles, des aryles, des alkylaryles, des arylalkyles, des alkylcycloalkyles, des cycloalkylalkyles, des arylcycloalkyles des cycloalkylaryles, des alkylcycloalkylaryles, des alkylarylcycloalkyles, des arylcycloalkylalkyles, des arylalkylcycloalkyles, des cycloalkylalkylaryl et des cycloalkylarylalkyles,
R¹⁶ et R¹⁹, ayant de 1 à 17 atomes de carbone, et pouvant être éventuellement substitués.

10. Composition selon l'une quelconque des revendications 1 à 9, dans laquelle le lubrifiant représente entre 10% et 50% en poids de la composition.

11. Utilisation de la composition selon l'une quelconque de la revendication 1 à 10, en tant que composition de transfert de chaleur dans un système de compression de vapeur, ou dans un moteur thermique.

12. Installation de transfert de chaleur comprenant un circuit contenant une composition selon l'une quelconque des revendications 1 à 10, en tant que composition de transfert de chaleur.

13. Installation selon la revendication 12, choisie parmi les installations mobiles ou stationnaires de chauffage par pompe à chaleur, de climatisation, de réfrigération, de congélation et les moteurs thermiques.

14. Procédé de production d'électricité au moyen d'un moteur thermique, ledit procédé comprenant successivement l'évaporation de la composition de transfert de chaleur, la détente de la composition de transfert de chaleur dans une turbine permettant de générer de l'électricité, la condensation de la composition de transfert de chaleur et la compression de la composition de transfert de chaleur, dans lequel la composition de transfert de chaleur est une composition selon l'une des revendications 1 à 10.

15. Procédé de chauffage ou de refroidissement d'un fluide ou d'un corps au moyen d'un système de compression de vapeur contenant une composition de transfert de chaleur, ledit procédé comprenant successivement l'évaporation de la composition de transfert de chaleur, la compression de la composition de transfert de chaleur, la condensation de la composition de chaleur et la détente de la composition de transfert de chaleur, dans lequel la composition de transfert de chaleur est une composition selon l'une des revendications 1 à 10.

## Patentansprüche

1. Zusammensetzung, die mindestens ein Schmiermittel auf Grundlage von Polyolestern sowie ein Kühlfluid F umfasst, welches 1-Chlor-3,3,3-trifluorpropen und mindestens eine stabilisierende Alkenverbindung umfasst, wobei letztere vom Typ C3 bis C6 ist und eine einzige Doppelbindung aufweist.

2. Zusammensetzung nach Anspruch 1, wobei die stabilisierende Verbindung aus der Gruppe ausgewählt ist, welche aus 1-Buten; cis-2-Buten; trans-2-Buten; 2-Methyl-1-propen; 1-Penten; cis-2-Penten; trans-2-Penten; 2-Methyl-1-buten; 2-Methyl-2-buten; 3-Methyl-1-buten und deren Mischungen besteht.

3. Zusammensetzung nach Anspruch 1, wobei die stabilisierende Verbindung aus 2-Methyl-2-buten und 3-Methyl-1-buten ausgewählt ist.

4. Zusammensetzung nach einem beliebigen der Ansprüche 1 bis 3, wobei das 1-Chlor-3,3,3-trifluorpropen zu einem Massenanteil von mindestens 90 %, vorzugsweise von mindestens 95 %, bevorzugt von mindestens 99 %, idealerweise von mindestens 99,5 % oder sogar von mehr als 99,9 % in der trans-Form vorliegt.

5. Verbindung nach einem beliebigen der Ansprüche 1 bis 4, wobei die Polyolester der folgenden Formel (I) entsprechen:
R¹[OC(O)R²]ₙ (I)
wobei:
- R¹ für einen Kohlenwasserstoffrest geradkettiger oder verzweigter Art steht, der möglicherweise mit einer Hydroxylgruppe substituiert ist und/oder mindestens ein Heteroatom umfasst, welches aus der Gruppe ausgewählt ist, die aus - O-, -N- und -S- besteht;
- jedes der R₂ unabhängig voneinander aus der Gruppe ausgewählt ist, die aus Folgendem besteht:
o i) H;
∘ ii) einem aliphatischen Kohlenwasserstoffrest;
∘ iii) einem verzweigten Kohlenwasserstoffrest;
∘ iv) einer Mischung aus einem Rest ii) und/oder iii) mit einem aliphatischen Kohlenwasserstoffrest, der 8 bis 14 Kohlenstoffatome umfasst; und
- n eine ganze Zahl ist, die mindestens 2 beträgt.

6. Zusammensetzung nach einem beliebigen der Ansprüche 1 bis 4, wobei die Polyolester ausgehend von Polyol erhalten werden, das aus der Gruppe ausgewählt ist, welche aus Neopentylglycol, Glycerin, Trimethylolpropan, Pentaerythrit, Dipentaerythrit, Tripentaerythrit und deren Mischungen besteht.

7. Zusammensetzung nach einem beliebigen der Ansprüche 1 bis 4 und 6, wobei die Polyolester ausgehend von mindestens einer verzweigten Carbonsäure erhalten werden, welche 5 bis 8 Kohlenstoffatome umfasst.

8. Zusammensetzung nach einem beliebigen der Ansprüche 1 bis 4, wobei es sich bei den Polyolestern um Poly(neopentylpolyol)ester handelt, die folgendermaßen erhalten werden:
i) durch Umsetzung eines Neopentylpolyols, das der folgenden Formel (V) entspricht: 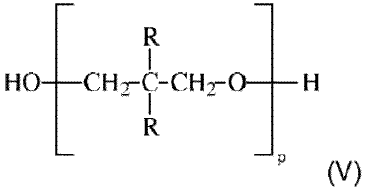 in welcher:
∘ jedes der R unabhängig voneinander für CH₃, C₂H₅ oder CH₂OH steht;
∘ p eine ganze Zahl im Bereich von 1 bis 4 ist; mit mindestens einer Monocarbonsäure, die 2 bis 15 Kohlenstoffatome aufweist, in Gegenwart eines sauren Katalysators, wobei das Molverhältnis zwischen den Carboxylgruppen und den Hydroxylgruppen niedriger als 1:1 ist, um eine teilweise veresterte Poly(neopentyl)polyol-Zusammensetzung zu bilden; und
ii) durch Umsetzung der teilweise veresterten Poly(neopentyl)polyol-Zusammensetzung, wie sie im Schritt i) erhalten wurde, mit einer anderen Carbonsäure, die 2 bis 15 Kohlenstoffatome aufweist, um die Zusammensetzung von Poly(neopentylpolyol)estern zu bilden.

9. Zusammensetzung nach einem beliebigen der Ansprüche 1 bis 4, wobei die Polyolester eine der folgenden Formeln (VIII) oder (IX) haben: 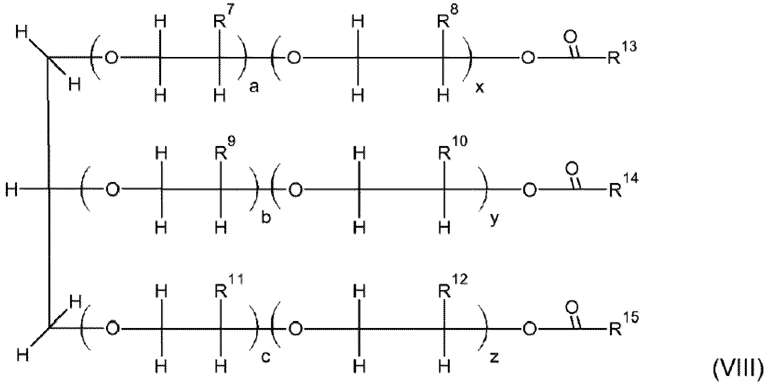 in welcher:
- R⁷, R⁸, R⁹, R¹⁰, R¹¹ und R¹² unabhängig voneinander für H oder CH₃ stehen;
- a, b, c, y, x und z unabhängig voneinander für eine ganze Zahl stehen;
- a+x, b+y und c+z unabhängig voneinander für ganze Zahlen im Bereich von 1 bis 20 stehen;
- R¹³, R¹⁴ und R¹⁵ unabhängig voneinander aus der Gruppe ausgewählt sind, welche aus den aliphatischen oder verzweigten Alkyken, den Alkenylen, den Cycloalkylen, den Arylen, den Alkylarylen, den Arylalkylen, den Alkylcycloalkylen, den Cycloalkylalkylen, den Arylcycloalkylen, den Cycloalkylarylen, den Alkylcycloalkylarylen, den Alkylarylcycloalkylen, den Arylcycloalkylalkylen, den Arylalkylcycloalkylen, den Cycloalkylalkylarylen und den Cycloalkylarylalkylen besteht,
R¹³, R¹⁴ und R¹⁵ von 1 bis 17 Kohlenstoffatome haben, wobei sie möglicherweise substituiert sein können.
oder 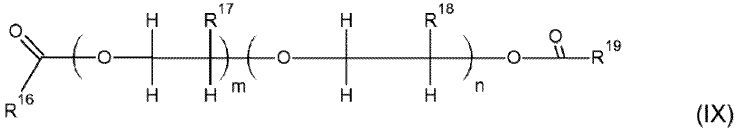 in welcher:
- jedes von R¹⁷ und R¹⁸ unabhängig voneinander für H oder CH₃ steht;
- m und n jeweils unabhängig voneinander für eine ganze Zahl stehen, wobei m+n eine ganze Zahl im Bereich von 1 bis 10 ergibt;
- R¹⁶ und R¹⁹ unabhängig voneinander aus der Gruppe ausgewählt sind, welche aus den aliphatischen oder verzweigten Alkyken, den Alkenylen, den Cycloalkylen, den Arylen, den Alkylarylen, den Arylalkylen, den Alkylcycloalkylen, den Cycloalkylalkylen, den Arylcycloalkylen, den Cycloalkylarylen, den Alkylcycloalkylarylen, den Alkylarylcycloalkylen, den Arylcycloalkylalkylen, den Arylalkylcycloalkylen, den Cycloalkylalkylarylen und den Cycloalkylarylalkylen besteht,
R¹⁶ und R¹⁹ von 1 bis 17 Kohlenstoffatome haben, wobei sie möglicherweise substituiert sein können.

10. Zusammensetzung nach einem beliebigen der Ansprüche 1 bis 9, wobei das Schmiermittel zwischen 10 % und 50 % des Gewichts der Zusammensetzung ausmacht.

11. Verwendung der Zusammensetzung nach einem beliebigen der Ansprüche 1 bis 10 als wärmeübertragende Zusammensetzung in einem System zur Dampfverdichtung, oder in einem Verbrennungsmotor.

12. Wärmeübertragungsanlage, die einen Kreislauf umfasst, welcher eine Zusammensetzung nach einem beliebigen der Ansprüche 1 bis 10 als wärmeübertragende Zusammensetzung enthält.

13. Anlage nach Anspruch 12, wobei sie aus den mobilen und stationären Anlagen zum Heizen mittels Wärmepumpe, zur Klimatisierung, zur Kühlung, zum Tiefgefrieren sowie den Verbrennungsmotoren ausgewählt ist.

14. Verfahren zur Stromerzeugung mittels eines Verbrennungsmotors, wobei das Verfahren nacheinander das Verdampfen der wärmeübertragenden Zusammensetzung, das Entspannen der wärmeübertragenden Zusammensetzung in einer Turbine, wodurch Strom erzeugt werden kann, das Kondensieren der wärmeübertragenden Zusammensetzung und das Verdichten der wärmeübertragenden Zusammensetzung umfasst, wobei es sich bei der wärmeübertragenden Zusammensetzung um eine Zusammensetzung nach einem der Ansprüche 1 bis 10 handelt.

15. Verfahren zum Erwärmen oder Kühlen eines Fluids oder eines Körpers mittels eines Systems zur Dampfverdichtung, welche eine wärmeübertragende Zusammensetzung enthält, wobei das Verfahren nacheinander das Verdampfen der wärmeübertragenden Zusammensetzung, das Verdichten der wärmeübertragenden Zusammensetzung, das Kondensieren der wärmeübertragenden Zusammensetzung und das Entspannen der wärmeübertragenden Zusammensetzung umfasst, wobei es sich bei der wärmeübertragenden Zusammensetzung um eine Zusammensetzung nach einem der Ansprüche 1 bis 10 handelt.

## Claims

1. A composition comprising at least one lubricant based on polyol esters and a refrigerant fluid F comprising 1-chloro-3,3,3-trifluoropropene and at least one C3 to C6 alkene stabilizing compound comprising a single double bond.

2. The composition as claimed in claim 1, wherein the stabilizing compound is selected from the group consisting of but-1-ene; cis-but-2-ene; trans-but-2-ene; 2-methylprop-1-ene; pent-1-ene; cis-pent-2-ene; trans-pent-2-ene; 2-methylbut-1-ene; 2-methylbut-2-ene; 3-methylbut-1-ene, and the mixtures thereof.

3. The composition as claimed in claim 1, wherein the stabilizing compound is chosen from 2-methylbut-2-ene and 3-methylbut-1-ene.

4. The composition as claimed in any one of claims 1 to 3, wherein the 1-chloro-3,3,3-trifluoropropene is in the trans form in a proportion by weight of greater than or equal to 90%, preferably greater than or equal to 95%, preferentially greater than or equal to 99%, ideally greater than or equal to 99.5%, or even greater than 99.9%.

5. The composition as claimed in any one of claims 1 to 4, wherein the polyol esters correspond to the following formula (I):
R¹[OC(O)R²]ₙ (I)
wherein:
- R¹ is a linear or branched hydrocarbon-based radical, optionally substituted with at least one hydroxyl group and/or comprising at least one heteroatom selected from the group consisting of -O-, -N-, and -S-;
- each R² is, independently of one another, selected from the group consisting of:
o i) H;
o ii) an aliphatic hydrocarbon-based radical;
o iii) a branched hydrocarbon-based radical;
o iv) a mixture of a radical ii) and/or iii) with an aliphatic hydrocarbon-based radical comprising from 8 to 14 carbon atoms; and
- n is an integer of at least 2.

6. The composition as claimed in any one of claims 1 to 4, wherein the polyol esters are obtained from polyol selected from the group consisting of neopentyl glycol, glycerol, trimethylolpropane, pentaerythritol, dipentaerythritol, tripentaerythritol and mixtures thereof.

7. The composition as claimed in any one of claims 1 to 4 and 6, wherein the polyol esters are obtained from at least one branched carboxylic acid comprising from 5 to 8 carbon atoms.

8. The composition as claimed in any one of claims 1 to 4, wherein the polyol esters are poly(neopentyl polyol) esters obtained by:
i) reaction of a neopentyl polyol having the following formula (V): 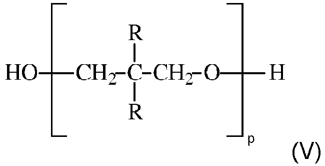 wherein:
o each R represents, independently of one another, CH₃, C₂H₅ or CH₂OH;
o p is an integer ranging from 1 to 4;
with at least one monocarboxylic acid having from 2 to 15 carbon atoms, in the presence of an acid catalyst, the molar ratio between the carboxyl groups and the hydroxyl groups being less than 1:1, to form a partially esterified poly(neopentyl)polyol composition; and
ii) reaction of the partially esterified poly(neopentyl)polyol composition obtained at the end of step i) with another carboxylic acid having from 2 to 15 carbon atoms, to form the composition of poly(neopentyl polyol) esters.

9. The composition as claimed in any one of claims 1 to 4, wherein the polyol esters have one of the following formulae (VIII) or (IX): 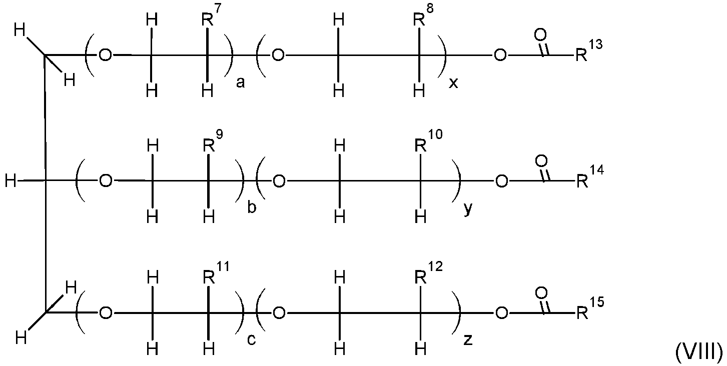 wherein:
- R⁷, R⁸, R⁹, R¹⁰, R¹¹ and R¹² are, independently of one another, H or CH₃;
- a, b, c, y, x and z, are, independently of one another, an integer;
- a+x, b+y, and c+z are, independently of one another, integers ranging from 1 to 20;
- R¹³, R¹⁴ and R¹⁵ are, independently of one another, selected from the group consisting of aliphatic or branched alkyls, alkenyls, cycloalkyls, aryls, alkylaryls, arylalkyls, alkylcycloalkyls, cycloalkylalkyls, arylcycloalkyls, cycloalkylaryls, alkylcycloalkylaryls, alkylarylcycloalkyls, arylcycloalkylalkyls, arylalkylcycloalkyls, cycloalkylalkylaryls and cycloalkylarylalkyls,
R¹³, R¹⁴ and R¹⁵, having from 1 to 17 carbon atoms, and able to be optionally substituted
or 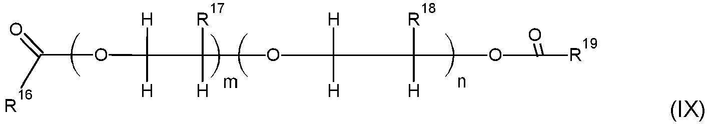 wherein:
- each of R¹⁷ and R¹⁸, is, independently of one another, H or CH₃;
- each of m and n, is, independently of one another, an integer, with m+n being an integer ranging from 1 to 10;
- R¹⁶ and R¹⁹ are, independently of one another, selected from the gorup consisting of aliphatic or branched alkyls, alkenyls, cycloalkyls, aryls, alkylaryls, arylalkyls, alkylcycloalkyls, cycloalkylalkyls, arylcycloalkyls, cycloalkylaryls, alkylcycloalkylaryls, alkylarylcycloalkyls, arylcycloalkylalkyls, arylalkylcycloalkyls, cycloalkylalkylaryls and cycloalkylarylalkyls,
R¹⁶ and R¹⁹, having from 1 to 17 carbon atoms, and able to be optionally substituted.

10. The composition as claimed in any one of claims 1 to 9, wherein the lubricant represents between 10% and 50% by weight of the composition.

11. The use of the composition as claimed in any one of claims 1 to 10 as heat-transfer composition in a vapor-compression system or in a heat engine.

12. A heat-transfer facility comprising a circuit containing a composition as claimed in any one of claims 1 to 10 as heat-transfer composition.

13. The facility as claimed in claim 12, selected from mobile or stationary facilities for heating via heat pump, air conditioning, refrigeration, freezing and heat engines.

14. A process for producing electricity by means of a heat engine, said process successively comprising the evaporation of the heat-transfer composition, expansion of the heat-transfer composition in a turbine making it possible to generate electricity, condensation of the heat-transfer composition and compression of the heat-transfer composition, wherein the heat-transfer composition is a composition as claimed in one of claims 1 to 10.

15. A process for heating or cooling a fluid or a body by means of a vapor-compression system containing a heat-transfer composition, said process successively comprising the evaporation of the heat-transfer composition, compression of the heat-transfer composition, condensation of the heat composition and expansion of the heat-transfer composition, wherein the heat-transfer composition is a composition as claimed in one of claims 1 to 10.
